# EUROPÄISCHE PATENTANMELDUNG

(11) **EP 1 696 177 A1**
(43) Veröffentlichungstag der Anmeldung: **30.08.2006**
(21) Anmeldenummer: 05090048.9
(22) Anmeldetag: 28.02.2005
(51) Int. Cl.: F23G 5/027, F23G 5/08, C10B 53/00, C10J 3/66

(54) **Integriertes Mehrbrennstoff- Vergasungsverfahren**

(71) Anmelder: Drechsler, Daniel, 16727 Oberkrämer (DE); Hagedorn, Marion, 16727 Oberkrämer (DE)
(72) Erfinder: Die Erfindernennung liegt noch nicht vor

(57) **Zusammenfassung**

Die Erfindung ist ein mehrstufiges Vergasungsverfahren in dem alle Vergasungsstufen in einer Einheit erfolgen. Die entstandenen Gase können thermisch nachbehandelt werden. Die thermische Nachbehandlung erfolgt in einer Hochleistungsbrennkammer (5) mit autothermer Nachverbrennung und Plasma Konditionierung.
Der Vergaser ist ein Vier- Stufen- Vergaser mit hoher Leistungsfähigkeit und Einsatzmöglichkeiten. Er produziert ein synthetisches Gas. Die inerten verbliebenen Stoffe werden bei nicht verschlackenden Medien staubförmig und bei verschlackenden Medien in flüssigem Zustand ausgetragen.
In der ersten Prozessstufe wird das Produkt getrocknet und in der zweiten Stufe bei niedriger Temperatur entgast. In der dritten Stufe erfolgt die Niedertemperaturpyrolyse. In der letzten Stufe erfolgt die restliche Kohlenstoffzersetzung. Für die Wasserstoff Reaktion wird aufgeheiztes wasserhaltiges Prozessgas rückgeführt.
Die thermische Nachbehandlung erfolgt in einer autothermen Hochleistungsbrennkammer mit einer Plasma Konditionierung.
Die Nachverbrennung erfolgt in einer Hochleistungsbrennkammer (5) autotherm. Das heiße Brenngas (1) und die vorgewärmte Luft werden mit hoher Geschwindigkeit radial in die Vorbrennkammer geführt, wobei die Luft außen unter dem Winkel und das Gas innen zur Mittellinie unter dem Winkel eingeführt werden. Die Verbrennung hebt die Gastemperatur bis an die Zersetzungsgrenze an.

## Beschreibung

Alle Verbrennungstechnologien wie Rostfeuerung, Drehrohrfeuerung, Wirbelschicht etc, können bei unterstochiometrischer Fahrweise für Vergasung eingesetzt werden.
Diese Verfahren sind technisch ausgereift und am weitesten eingesetzt, weisen jedoch eine schlechte Schlackequalität, (benötigt eine getrennte Nachbehandlung) niedrige Wirkungsgrade und feuerungstechnische Probleme auf. Diese Verfahren gelten in einer Gesamtbewertung als einsetzbar, werden jedoch als nicht empfehlenswert abgestuft, weil sie alle nur in Verbindung mit einer Nachverbrennung eingesetzt werden.

Die Entgasungsverfahren (Pyrolyseverfahren) sind für diesen Einsatzfall nicht geeignet. Nicht nur der geringe elektrische Wirkungsgrad (10- 16%) sondern auch der hohe betriebliche Aufwand und die niedrige Verfügbarkeit machen diese Anlagen für diesen Einsatzfall nicht tragbar.
Die meisten Verfahren sind nur dem Namen nach Vergasungsverfahren, weil sie alle eine Nachverbrennung haben. Diese haben einen sehr geringen elektrischen Wirkungsgrad (14%) eine hohe Schadstofffracht, Abrasion, Korrosion und Verschmutzung der nach geschalteten Heizflächen. Dieses führt zu hohen Betriebskosten und niedrigen Stanzeiten. (unter 75 %). Die wenigen existenten Vergasungsverfahren haben Probleme mit der Gasqualität.

Die Plasma- Verfahren sind Verfahren bei denen Abfall mit Hilfe eines Plasma Generators thermisch zersetzt wird. Diese Verfahren haben einen hohen Energiebedarf. Es gibt Verfahren aus anderen Gebieten, wie Schachtöfen mit kombinierter Gasbehandlung, welche mit Einschränkungen einsetzbar sind.
Alle Gase aus Vergasungs- Verfahren werden nachbehandelt.
Als Nachverbrennungsverfahren sind am bekanntesten, die thermischen Behandlungen mit Zusatzbrennstoff, wobei als Oxidationsmittel Luft oder Sauerstoff zum Einsatz kommen.
Diese Verfahren sind technisch ausgereift und am weitesten eingesetzt, weisen jedoch einen schlechten Wirkungsgrad und eine unvollständige Zersetzung verschiedener Schadstoffe auf. Die Gase benötigen teilweise eine zusätzliche Reinigung. Diese Verfahren werden bei energetischer Nutzung der Gase jedoch als nicht empfehlenswert abgestuft. Die katalytischen Verfahren sind vorteilhafter bei den Anforderungen eine bessere Gasqualität zu liefern, aber hohe Teergehalte erhöhen die Arbeitstemperatur des Katalysators und vermindern seine Standzeit. Am effektivsten sind die Plasma Verfahren. Diese Verfahren haben einen hohen Energiebedarf.

Die in den Patentansprüchen 1-10 angegebene Erfindung, ist ein mehrstufiges vergasungsVerfahren in einer Einheit mit einer hohen Brennstoffausnutzung und einem qualitativ guten Brenngas. Das Verfahren löst die Teer- und Schadstoff- Problematik indem in der autothermen Nachverbrennung mit Plasma Konditionierung durch die hohe thermische Effektivität des Plasma Strahls, diese völlig zersetzt werden. Die energetische Effizienz wird durch die recuperative Aufheizung des Mediums mit Prozessgas gewährleistet.
Durch Prozessführung und konstruktive Merkmale wird ein Höchstwirkungsgrad thermisch erreicht, mit gleichzeitig geringeren Investitionskosten und einer besseren Verfügbarkeit. Das Verfahren hat von allen Verfahren den höchsten exegetischen Wirkungsgrad mit den geringsten Schadstofffrachten.
Das Vergasungsmedium wird in Förderrichtung eingedüst um die Reaktionszeit zu erhöhen

Die Bereiche der thermischen Behandlung haben keine beweglichen Teile und sind somit, auch auf Grund der geringen Korrosion und Abrasion, wenig störanfällig.
Da dem Konditionierer eine sehr geringe Verbrennungsluft zugeführt wird, ist der Abgasstrom gegenüber vergleichbaren Anlagen gering. Daraus resultieren geringer Aufwand und niedrige Kosten in der Gasreinigung.

Die im Patentanspruch 1-10 angegebene Erfindung ist ein Verfahren, welches für alle kalorischen Stoffe einsetzbar ist. Das Verfahren ist gekennzeichnet durch eine hohe Ökoeffizienz, das heißt äußerst geringe Emissionen und äußerst geringe Reststoffe.
Die wenigen beweglichen Teile bewirken geringe Wartungskosten. Die Prozesssteuerung kann kontrolliert ablaufen und so die Störanfälligkeit der Anlage minimieren.

Durch Prozessführung und konstruktive Merkmale wird ein Höchstwirkungsgrad elektrisch erreicht, mit gleichzeitig geringeren Investitionskosten und einer besseren Verfügbarkeit.

Die Erfindung ist ein Vergaser, einsetzbar für alle Arten von Brennstoffen.
Der Integrated Multifuel- Vergaser ist ein Vier- Stufen- Vergaser mit hoher Leistungsfähigkeit und Einsatzmöglichkeiten.

In der ersten Stufe(1) wird das Produkt mit Prozessgas getrocknet und bei niedriger Temperatur entgast.

In der zweiten Stufe(2) erfolgt die Vergasung mit Prozessgas. Die Besonderheit des Vergasungsprozesses ist, dass die gasförmigen Stoffströme in der Förderrichtung in das zu vergasende Medium eingeführt werden, um das Medium zu verdichten und zu fördem. Der Gleichstrom erfolgt in einem Winkel zur waagerechten, welcher kleiner ist als der Schüttwinkel des zu vergasenden Stoffes. Die Nachreaktionen erfolgen im Querstrom.

In der dritten Stufe(3) erfolgt die Reduktion und die Wasserstoffreaktion mit dem Wasser aus dem rück geführten feuchten Gas. Die Besonderheit dieser Prozessstufe ist, dass der Wassergehalt in dem Prozessgas durch die Temperatur der Waschflüssigkeit

In der vierten Stufe(4) erfolgt die Kohlestoff Oxidation mit Luft und das Einschmelzen der Schlacke und Metalle.

Die Reaktionszeit für die vollständige Vergasung des zu vergasenden Mediums ist von der Temperatur und der Menge des Vergasungsmediums abhängig. Um hohe Reaktionsraten zwischen den Gaskomponenten zu erreichen, muss eine gute Vermischung der Medien erfolgen.
Die festen Brennstoffe müssen für ihre endgültige Zerlegung in dem Vergaser bei entsprechender Temperatur eine entsprechende Verweilzeit haben.
In der letzten Stufe ist die Verweilzeit nicht geregelt. Die Stoffe werden der Oxidation und hohen Temperatur solange ausgesetzt bis sie entweder vergast oder geschmolzen sind. Die 4 Verfahrensstufen ermöglichen eine kontrollierte Prozessführung und geringe Störanfälligkeit. Die Reststoffe werden flüssig ausgetragen.
Das Verfahren ist gekennzeichnet durch:
- hohem thermischen Wirkungsgrad,
- intensivem Wärmeaustausch zwischen Gas und Feststoffen,
- zuverläßige Konstruktion in vollständig dichter Ausführung,
- gute Vergasungsqualität, der zugefügte Brennstoff kann das System nicht verlassen, ohne vergast oder vollkommen geschmolzen zu sein,
- wartungsarme Konstruktion mit langlebiger Feuerfestausmauerung.
- leichte Prozessführung.

Die festen Brennstoffe werden über ein Einspeisung System (A) in den Vergaser aufgegeben, wobei die Aufgabe durch Niveaumessung im Einspeisungsrohr unterhalb des Schleusensystems kontrolliert wird.

Rückgeführtes Prozessgas wird durch Düsen im Boden der jeweiligen Vergasungs Stufe im Gleichstrom eingeführt. Die feinen Partikel, welche sich auf dem Boden des Vergasungsbettes sammeln, werden in einem fluidisierten Bett in den Schlackebehälter gefördert und eingeschmolzen. Ein Teil der gasreinigungs Produkte, wie Aktivkoks werden in diesen Bereich zurückgeführt und in die Schlacke eingeschmolzen. Die sich im Kontakt mit den Abfallmaterialien entwickelnden Gase strömen im Querstrom zu den herab gleitenden Stoffen die Abfallschicht hinauf.

Entsprechend der Reaktionsstufen wird der Vergaser entsprechend dem Durchlauf der Medien von oben in die Verdampfungs- (1), Entgasungs- Vergasungs- Verkohlungs-(2) sowie Partialverbrennungs-(3) und Verglasungszone (4) eingeteilt werden.

In der ersten Zone, der Verdampfungszone, werden alle Stoffe mit niedrigem Dampfdruck, wie Wasser- und Kohlenwasserstoffe, verdampft und strömen zusammen mit dem zur Verdampfung eingesetzten Prozess gas in den seitlich angebrachten Strahlenverdichter Das Gas wird entwässert (7) und wieder aufgeheizt (6) in die nächste Vergasungsstufe eingeführt. Die in dem Pyrolyse-Vergasungsbereich gebildeten Gase werden gemeinsam über eine am oberen Teil des Vergasers befindlichen Abzugs entnommen und einer thermischen Nachbehandlung (5) unterzogen.

Dieses Mischgas besteht hauptsächlich aus Kohlenmonoxid, Stickstoff, Kohlenwasserstoffen, Wasserstoff, Wasserdampf sowie einem hohen Gehalt an Teerkomponenten.

Die Temperatur des Gases (3) wird zwischen 600 - 800° C gehalten.

In der mittleren Zone, der Verkohlungszone (C), wird das eintretende Material in einem Temperaturbereich von 500 - 1.400° C verkohlt

Der entstehende verkohlte Abfallstoff besteht zu 10 - 20 % aus Kohlenstoff, der in der unteren Zone, der Partialverbrennungs- und Verglasungszone, durch die vorgewärmte Luft zu Kohlenmonoxid oxidiert wird. Trotz dieses niedrigen Kohlenstoffgehalts reicht die Partialverbrennung zum Schmelzen der anorganischen Stoffe aus.

Die Partialverbrennung (4) hält die Temperatur in dieser Zone bei 1.500 bis 1.600°C. In diesem Temperaturbereich reagieren die verschiedenen, in dem Abfallstoff enthaltenen Metalle unterschiedlich:
- Eisen und Metalle mit einer höheren Sauerstoffaffinität als Eisen (wie Al, Ti, Mg, Ca usw.) werden oxidiert und in der Schlacke gelöst (Eisenoxid kann zu geschmolzenem Eisen reduziert werden, wenn der Charge zusätzlich Kohle und Kalk beigemischt wird).
- Metalle wie Zink und Blei usw. werden verdampft und verlassen die Vergasungseinheit zusammen mit dem Gas.
- Metalle mit einer niedrigeren Sauerstoffaffinität als Eisen (wie Cu, Ni, Ag, Au usw.) werden zu einer Metalllegierung geschmolzen.

Das flüssige Metall (E) wird zusammen mit der Schlacke abgestochen und in einer Gießpfanne aufgefangen.

Nach dem Abkühlen können die Schlacke und Metalle durch ihr unterschiedliches spezifisches Gewicht leicht getrennt werden.

Die Gase werden einer Nachbehandlung zugeführt.
Dieses ist ein Verfahren mit einer autothermen Hochtemperatumachverbrennung mit Plasma Konditionierung.

Das Verfahren wird in der Behandlung von teer- und schadstoffhaltigenhaltigen Brenngasen eingesetzt.

Die Nachverbrennung erfolgt in einer Hochleistungsbrennkammer autotherm (3).
Das heiße Brenngas (1) und die vorgewärmte Luft(2) werden mit hoher Geschwindigkeit radial in die Vorbrennkammer geführt, wobei die Luft außen und das Gas innen zur Mittellinie eingeführt werden. Die Verbrennung hebt die Gastemperatur bis an die Zersetzungsgrenze an.

Anschließend erfolgt eine Plasma Konditionierung des Gases, mittels eines ionisierten Luftstrahls aus einem thermischen Plasmagenerator. Die Zersetzungstemperatur kann bis zu 1600°C angehoben werden. Die Zersetzungstemperatur ist abhängig von der Gaszusammensetzung und des Anwendungs Zweckes des behandelten Gases.
Als hoch Temperatur Quelle wird ein Plasmagenerator eingesetzt da er den besten thermischen Wirkungsgrad für den Hochtemperaturbereich hat.

Die Zersetzung von allen Schadstoffen aus dem behandelten Gas ist durch folgende verfahrenstechnische Qualitäten des Plasmagenerators gegeben:
- Hohe Wärmeeffektivität,
- Hoher und intensiver Wärmeaustausch zwischen Gas und anderen Stoffen
- einfache Konstruktion in vollständig dichter Ausführung,
- kein Material kann das System verlassen, ohne vergast oder vollkommen geschmolzen zu sein,
   - erprobte Konstruktion mit langlebiger Feuerfestausmauerung.

Mit diesem Verfahren können alle brennstoffhaltigen Gase behandelt werden. Die Gase werden getrennt in die thermische Nachbehandlung geführt.

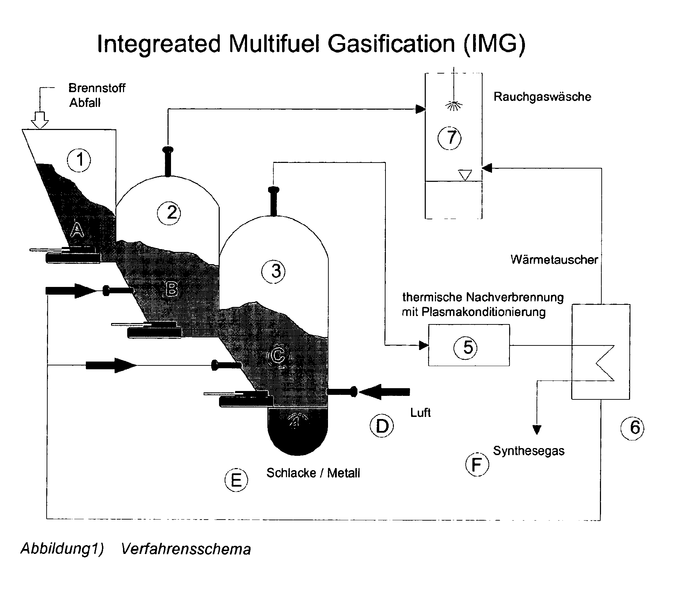

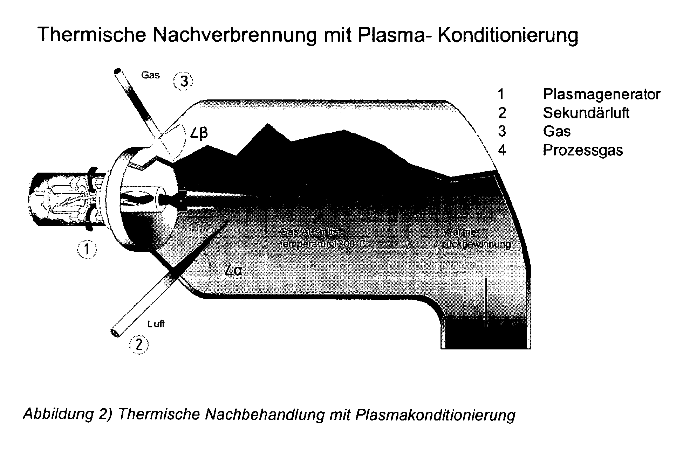

## Patentansprüche

1. Verfahren zur Vergasung von Brennstoffen oder anderen thermisch zersetzbaren Stoffen, bei dem der zu vergasende Stoff oder Wärmeträger in einer integrierten Einheit in mehreren Stufen mit einem im Stoffstrom fließenden Entgasungs-Vergasungsmedium, vorzugsweise Prozessgas zersetzt wird, **dadurch gekennzeichnet, dass** die zur Vergasung eingesetzten Stoffe in einer ersten Stufe mit rück geführtem Gas entgast und entwässert werden.

2. Verfahren nach Anspruch 1, **dadurch gekennzeichnet, dass** der zu vergasende Stoff und das Vergasungsmedium im Gleichstrom unter einem Neigungswinkel im Gleichstrom fließen, welcher unter dem Schüttwinkel des zu vergasenden Stoffes liegt.

3. Verfahren nach den Ansprüchen 1 und 2, **dadurch gekennzeichnet, dass** das generierte wasserdampfhaltige Gas aus der ersten Stufe in einem Wäscher gereinigt, teilentwässert wird und recuperativ aufgeheizt als Vergasungsmedium in den Prozess zurückgeführt wird.

4. Verfahren nach den Ansprüchen 1, 2 und 3, **dadurch gekennzeichnet, dass** in der letzten Stufe Vergasungsstufe vorgewärmte Luft als Vergasungsmedium Vergasung des Restkohlenstoffes im Querstrom eingeführt wird. Der Vergasungsvorgang wird durch aufgeheiztes Gas mit definiertem Wassergehalt zur Wasserstoffreaktion begünstigt. Vergasungsprodukte werden im Gegenstrom ausgetragen, wobei die Vergasungstemperatur so geregelt wird, dass die restlichen Stoffe eingeschmolzen werden.

5. Vorrichtung zur Durchführung des Verfahrens nach den Ansprüchen 1 bis 4, **dadurch gekennzeichnet, dass** die einzelnen Vergasungsstufen aus einer geschlossenen Kammer bestehen, In die Eindüsung erfolgt in einem Bett dessen Neigung zur Senkrechten kleiner dem Schüttwinkel des zu vergasenden Stoffes ist.

6. Vorrichtung nach Anspruch 5, **dadurch gekennzeichnet, dass** jede Verfahrensstufe einen definierten Reaktionsweg hat, welches den Prozessanforderungen des verbliebenen Stoffes angepasst wird.

7. Vorrichtung nach den Ansprüchen 5 und 6, **dadurch gekennzeichnet, dass** die Eindüsungsstufen versetzt sind.

8. Vorrichtung nach den Ansprüchen 5, 6 und 7 **dadurch gekennzeichnet, dass** nach jedem Versatz die Eindüsung des neuen Vergasungsmediums in Förderrichtung erfolgt. Die Nachreaktion erfolgt im Querstrom.

9. Vorrichtung zur thermischen Nachbehandlung von Gasen oder anderen thermisch zersetzbaren Stoffen, bei dem der zu behandelnde Stoff, in eine Brennkammer mit einer Rotationsströmung zur Mittellinie eingeführt wird. Das zu behandelnde Gas wird von einer thermischen Plasma Quelle welche zentral zur Mittellinie eingeführt wird ionisiert. Die Verbrennungsluft wird an der Außenwand der Brennkammer eingeführt.

10. Verfahren nach Anspruch 9, **dadurch gekennzeichnet, dass** die zur Nachbehandlung eingeführte Luft tangential an der Brennkammerwand mit höherer Geschwindigkeit als das Synthesegas eingeführt wird, die Nachverbrennung erfolgt somit von innen nach außen. Somit ist gewährleistet das die Höchsttemperaturen, welche zur thermischen Zersetzung benötigt wird in dem zu behandelnden Gas entstehen.
